# EUROPEAN PATENT SPECIFICATION

(11) **EP 2 128 575 B1**
(45) Date of publication and mention of the grant of the patent: **04.07.2012**
(21) Application number: 09157427.7
(22) Date of filing: 06.04.2009
(51) Int. Cl.: G01F 23/24

(54) **Sensor for liquids**
Füllstandsmessfühler
Capteur de niveau pour liquides

(30) Priority: 07.04.2008 IT TO20080266
(43) Date of publication of application: 02.12.2009
(73) Proprietor: Indesit Company S.p.A., 60044 Fabriano (AN) (IT)
(72) Inventor: Burzella, Luciano, I-60044, Fabriano (AN) (IT); Vinerba, Brunetta, I-60044, Fabriano (AN) (IT)
(74) Representative: Dini, Roberto

(56) References cited:
- EP-A- 0 582 329
- WO-A-00/25132
- FR-A- 2 298 194
- FR-A- 2 737 297
- US-A- 3 646 541
- US-A- 3 999 148

## Description

The present invention relates to a sensor for detecting the presence of liquids according to the preamble of claim 1.

The present invention is particularly suited to the field of household appliances, e.g. when implemented in a laundry washing or washing/drying machine or a dishwasher, wherever a sensor is required for detecting the presence or the characteristics of liquids.

More specifically, the present invention is applicable to those laundry washing machines or dishwashers which are known to those skilled in the art of household appliances as "long-fill" machines, which comprise a tank for washing agents (e.g. detergents, softeners, rinse aids); in these machines, predetermined doses of said washing agents are supplied into the wash chamber from the tank for each treatment.

These machines therefore require that the presence of washing agents in the tank is detected so that the user can be warned when the tank needs to be filled.

As known, the presence of a liquid can be detected by using optical sensors which detect the attenuation of a light beam through a liquid.

This type of sensors, however, cannot work with all types of detergent because, as known, the latter may have different density and colour.

It is also known that liquids can be detected by using capacitive sensors, which measure a liquid capacity between two electrodes.

However, not even this latter type of sensor can always provide reliable readings when the liquid is a detergent or a softener. Liquids of this type are very viscous and therefore tend to adhere to the electrodes, thus forming a film that stays between the latter and alters the sensor reading: in fact, even if the liquid tank is empty, the sensor will keep detecting the presence of liquid due to the film formed between the electrodes.

Conductivity sensors are another type of sensors that can be used for detecting the presence of liquids; they work by detecting the resistance of a liquid in which electrodes are immersed.

Although they provide good performance in some applications, the sensors currently in use suffer from some drawbacks whenever they are to be used in tanks wherein a liquid, in particular a washing agent, may have to stay for a long time.

A first drawback is related to an electrolysis phenomenon: in order to detect the conductivity of a liquid, the sensor applies a potential difference across the electrodes and detects the current flow; when the detection is over, said potential difference is removed. When however the sensor is used for detecting the presence of a detergent or softener, at the end of the detection process the electrodes will tend to remain biased; this will cause two effects: the electrodes will tend to wear and the liquid will tend to deposit onto the electrodes, thus forming scale that will affect subsequent readings.

A second drawback is related to the fact that, if a plurality of liquids are to be detected in different tanks, it will be necessary to use multiple sensors, each having its own electrodes and output and requiring its own pilot circuit.

Document FR 2 737 297 describes a liquid level sensor comprising an oscillator circuit and two pairs of electrodes adapted to be immersed into a liquid. Document US 3 646 541 describes a liquid level sensor having a single electrode pair adapted to be immersed into a liquid and having an associated logic value which is compared to a reference value to determine whether said electrode pair is immersed in the liquid or in air.

This leads to a more costly and complex liquid detection system.

The object of the present invention is to solve the above-described problems of the liquid sensor solutions known in the art.

In particular, it is the main object of the present invention to solve the problem of the complexity of the liquid detection system.

These and other objects are achieved through a liquid detection sensor and system incorporating the features set out in the appended claims, which are intended as an integral part of the present description.

The present invention is based on the general idea of providing a sensor for detecting the presence of liquids which comprises an oscillator circuit whose output alternately has a low logic value and a high logic value, wherein the duration of the high logic value and of the low logic value depends upon the impedance across two respective electrode pairs to be immersed into the same liquid in two different positions or into two distinct liquids.

In this manner, the oscillator's capability of oscillating between two levels is exploited in order to control two electrode pairs: by detecting the duration of the low logic level and of the high logic level, it is in fact possible to detect the presence of a liquid in the position where each electrode pair is located.

Moreover, this type of sensor turns out to be particularly advantageous when used as a level sensor for a liquid contained in a tank, since each electrode pair can be placed at a level to be detected (for example, when two electrode pairs are used, said two pairs may be located at the two levels which are considered to be the maximum and minimum levels, respectively, of the liquid in the tank). When the electrodes are immersed in a liquid, in particular water or detergent or softener, the resistance is much lower than when the electrodes are placed in air, so that the duration of the output signal will be much different.

In addition, the sensor is advantageously equipped with a pilot circuit which can turn off the oscillator, thereby setting the output thereof to the low logic value and eliminating any potential difference across the electrodes. This allows to achieve a longer electrode life, as well as to prevent any degradation of the liquid due to electrolysis phenomena.

In this case, it is also possible to connect a plurality of equal sensors to a single output, thus reducing the number of outputs and the complexity of the system.

A control unit activates the various sensors selectively, so as to read the values of any sensor on the same output line; this is particularly advantageous when more than two levels in one tank or in a plurality of tanks are to be measured.

In order to overcome the problems related to electrolytic phenomena, which cause electrode polarization resulting in a blocked oscillator, the sensor is advantageously fitted with a depolarization circuit which allows the electrodes to be discharged at each transition of the output between the two (high and low) logic values.

Advantageously, said depolarization circuit is controlled by the oscillator itself without requiring any active components.

The electrodes may be placed inside a bell, which may for example be built in a cap of a washing agent tank of a household appliance, that allows a portion of the electrodes to be kept dry even when the bell is entirely submerged in a liquid. This measure reduces liquid deposits on the electrodes, thus ensuring a longer life and a proper operation of the sensor.

In order to further reduce the problem of liquid deposits on the electrodes, which cause changes in the sensor readings, the electrode portions which is not to be immersed is advantageously coated with an insulating material, in particular plastic. Any liquid sticking to the plastic will not therefore affect the electrode's reading, since the latter will not be changed by the resistance of the liquid that has adhered to the plastic.

In a further advantageous embodiment, the sensor is equipped with an optoisolator placed at the pilot input and/or at the output of the oscillator for the purpose of isolating the electrodes from the pilot and output lines.

This measure turns out to be particularly advantageous in household appliances, wherein the control unit connected to the sensor must also drive high-voltage loads (e.g. 110VAC or 230VAC) and there is the risk that a fault may cause high voltage to reach the electrodes, thus seriously compromising the electric safety of the appliance.

Further objects and advantages of the present invention will become apparent from the following description and from the annexed drawings, which are supplied by way of non-limiting example, wherein:
- Fig. 1 is the electric diagram of a sensor according to a first embodiment of the present invention;
- Fig. 2 is the electric diagram of a sensor according to a second embodiment of the present invention;
- Figs. 3a-3d show the output signal of a sensor according to the present invention when liquids are present or absent;
- Fig. 4 is the electric diagram of a sensor according to a third embodiment of the present invention;
- Fig. 5 is the electric diagram of a sensor according to a fourth embodiment of the present invention;
- Fig. 6 is the electric diagram of a liquid detection system comprising a plurality of sensors according to the present invention;
- Fig. 7 is the electric diagram of a liquid detection system comprising two sensors according to a fifth embodiment of the present invention;
- Figs. 8 and 9 are two views of a cap into which a sensor's electrodes have been inserted.

In the present description the same reference numerals or names will be used for designating identical or equivalent means. It should also be stated beforehand that all values mentioned below in regard to the properties of the various components (e.g. capacity of capacitors, resistance of resistors, etc.) are only provided in order to illustrate particular embodiments of the present invention and should not therefore be interpreted as limitations of the present invention.

The following examples have non-limiting explanatory purposes only; sensors according to the present invention may also be obtained by combining together single features from different embodiments among the ones described below, so as to adapt the sensor to specific requirements by using functions or characteristics described hereafter with reference to different embodiments of the invention.

### EXAMPLE 1

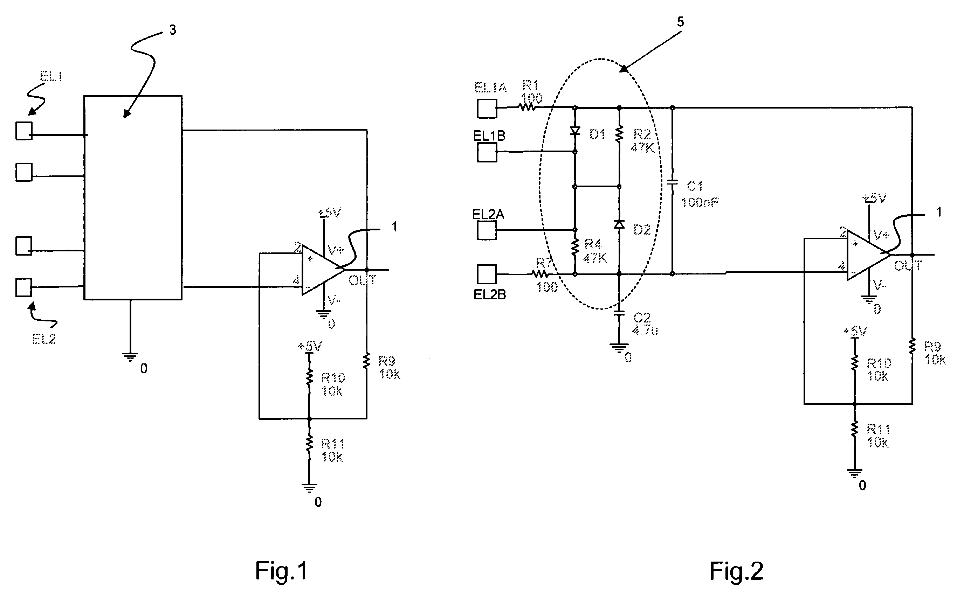

Referring to Fig. 1, there is shown the basic electric diagram of a sensor according to a first embodiment of the present invention.

The sensor essentially consists of an oscillator obtained by using an operational amplifier 1 (e.g. an LM358 amplifier) in a "comparator" configuration.

As known, such a configuration includes two feedback branches between the inputs and the output of the operational amplifier.

In the example of Fig. 1, the operational amplifier is connected across a ground (0V) and a direct current supply V_{CC}=5V.

The first feedback branch, which extends from output OUT to positive input 2 of the operational amplifier, consists of a resistive network R9-R10-R11 whose function is to establish a switching threshold for output OUT.

In this example, the value of R9, R10 and R11 is 10KΩ.

The second feedback branch consists of an RC circuit (designated as a whole by reference numeral 3) which connects output OUT to negative input 4 of operational amplifier 1.

The oscillation period of output signal V_{OUT} depends upon the time constant established by the feedback branch that comprises the RC circuit.

The sensor is fitted with two electrode pairs EL1 and EL2 which can be immersed into liquids; for this purpose, the electrodes may consist of small insoluble metal bars, e.g. made of stainless steel.

When the electrodes are held in air, they form an open circuit and the oscillation period is defined by the RC circuit only, designated by reference numeral 3.

As one or both of the electrode pairs is(are) immersed into a liquid, more current can flow in the RC circuit: in such a case, the liquid behaves like an impedance placed between the electrode pairs; this impedance affects the oscillation period of output signal V_{OUT}.

The RC circuit is conceived in a manner such that only one electrode pair corresponds to each logic level of the output signal, since that pair only contributes in a substantial way to the impedance of the feedback branch for that logic level of the output signal.

Thus, the duration of the high logic value and of the low logic value of signal V_{OUT} depends upon the impedance across a respective electrode pair EL2, EL1. By measuring the duration of the high logic value and of the low logic value, it is therefore possible to know whether the electrode pair associated with the respective logic value is immersed in a liquid or in air.

### EXAMPLE 2

In the example of Fig. 2, the RC circuit consists of a 4,7µF capacitor C2 and an electrode depolarization circuit 5. An additional 100nF capacitor C1 is applied to the RC circuit in order to suppress any noise on the input circuit.

Depolarization circuit 5 is connected between output OUT and input 4 of operational amplifier 1, and consists of two subcircuits, each comprising a resistor (R2, R4) and a diode (D1, D2) arranged in parallel.

The two subcircuits are connected in series with the diodes, which are connected with a common cathode; thus, the two diodes will be conductive at different logic levels of output Vout.

Each electrode pair EL1 and EL2 is connected in parallel to a respective subcircuit of the depolarization circuit, i.e. in parallel to a respective diode and a respective resistor.

Diodes D1 and D2 are so arranged as to be reverse-biased, and therefore non-conductive, when the respective electrode pair (EL1, EL2) in parallel must contribute to the impedance of the feedback branch extending from the output to the negative input of the oscillator.

In the example of Fig. 2, in accordance with this electrode arrangement both electrode pairs have one electrode (EL1B and EL2A) connected to the same node, which also acts as a connection node for the two subcircuits of the depolarization circuit 5.

The other electrodes (EL1A and EL2B) are connected to the respective subcircuits through a small 100Ω resistor (R1, R7), whose function is to limit the current on the electrodes in order to prevent the amplifier output from becoming saturated. This solution appears to be preferable when high-conductivity liquids, such as detergents or softeners, are to be detected.

Said resistor may be omitted, but in such a case it will be preferable to take appropriate measures against output signal distortion.

Depolarization circuit 5 allows to obtain, from the same sensor output OUT, a signal which allows to detect the presence of liquids by means of both electrode pair EL1 and electrode pair EL2 at the same time.

In particular, said circuit allows to associate the charge time of capacitor C2 with electrodes EL2 and the discharge time of C2 with electrodes EL1.

In order to make this condition possible, a pulsed direct current will inevitably flow through each electrode pair, so that each electrode will always be biased in the same manner: electrode EL1A charged positively, electrode EL1B charged negatively, electrode EL2A charged positively, electrode EL2B charged negatively.

If the sensor is used for detecting washing agents, such as detergents and softeners, and in general for detecting liquid substances (e.g. water) having polar molecules, the electrodes will be immersed into an electrolyte (whose behaviour is different from that of an ideal resistance); this involves irreversible polarization of the electrodes, de facto preventing any further current flow after the first C2 charge (for electrodes EL2) and C2 discharge (for electrodes EL1) cycle (which condition is essential for keeping the oscillator active).

Below the operation dynamics of the circuit shown in Fig. 2 will be described with reference to electrodes immersed in an electrolyte.

### Change phase

Assuming the amplifier output to be at the high logic value (Vout=Vcc) at a certain instant, there will be a current which, by flowing through diode D1 and electrode pair EL2, will charge capacitor C2. In this phase, electrode EL2A will be biased with a positive potential with respect to electrode EL2B.

At the instant when potential across C2 is made to exceed the threshold set at non-reversing input 2 of the operational amplifier through resistors R9-R10-R11, the amplifier output will switch to the low logic value, i.e. it will take a value Vout= 0V, after which the discharge phase will begin.

The duration of the charge phase of capacitor C2 (corresponding to the duration of the high logic value of the output) therefore depends upon the impedance across electrodes EL2.

### Discharge phase

In this phase, a current is generated from the positive pole of capacitor C2 (circulating in the direction opposite to that of the charge phase) which then flows through diode D2 and electrodes EL1 to finally reclose to ground through the amplifier output (which, as aforementioned, has a potential Vout = 0V).

The duration of the discharge phase of capacitor C2 (corresponding to the duration of the low logic value of the output) therefore depends upon the impedance across electrodes EL1 determined by the liquid in which the latter are submerged. Through the effect of the discharge current, diode D2 has a direct polarization, and across its terminals there is a potential difference of approximately 0.7V. Since D2 is connected in parallel to electrodes EL2 (the cathode being connected to electrode EL2A and the anode being connected to electrode EL2B), diode D2 imposes on electrodes EL2 a polarity which is opposite to that taken during the previous charge phase.

From this moment onwards, electrodes EL2 (electrode EL2A being negative and electrode EL2B being positive) can be considered to be "debiased" and are therefore ready to receive the next charge current, thus allowing the oscillator to cycle.

In this phase, electrode EL1B is biased with a positive potential with respect to electrode EL1A.

### Next charge phase

During the next C2 charge phase, electrodes EL1 are debiased.

In this phase, in fact, diode D1 (through which the charge current flows) undergoes a direct polarization and across its terminals there is a potential difference of approximately 0.7V. Since said terminals are substantially connected in parallel to electrodes EL1 (the anode being connected to electrode EL1A and the cathode being connected to electrode EL1B), diode D1 imposes on the electrodes a polarity which is opposite to that taken during the previous discharge phase. From this moment onwards, electrodes EL1 (electrode EL1A being positive and electrode EL1B being negative) are ready to receive the next discharge current, thus allowing the oscillator to cycle.

If the electrodes are in air, i.e. in the absence of a liquid, resistors R2 and R4 perform the function of ensuring conduction in the circuit during the discharge and charge cycle of capacitor C2. Therefore, these two resistors determine the duration of the respective charge and discharge transitions (which can be detected at the sensor output) in the liquidless condition.

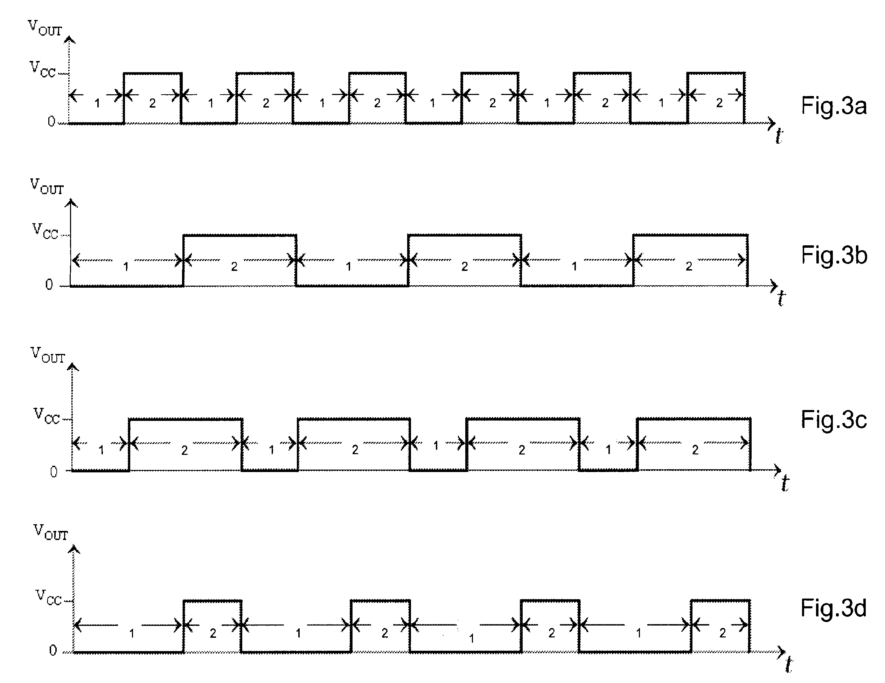

Figs. 3a-3d show the output signal of operational amplifier 1 (not taking into account any signal reversal operations which may be carried out downstream of the operational amplifier 1) in the different cases wherein electrodes EL1 and EL2 are immersed or not in a liquid.

In Fig. 3a both electrodes are immersed in a liquid; in Fig. 3b both electrodes are in air; in Fig. 3c electrodes EL1 are immersed in a liquid e electrodes EL2 are in air; in Fig. 3d electrodes EL2 are immersed in a liquid and the electrodes EL1 are in air.

Because the resistance of the liquid in which the electrodes are immersed is considerably lower than that of air (open circuit condition, theoretically infinite resistance), the oscillation period is shorter when the electrodes are immersed in liquid.

In fact, it can be noted in Figs. 3a-3d that output signal V_{OUT} takes the high logic value (V_{OUT}=V_{CC}=5V) for a longer time when electrodes EL2 are in air, as well as that the output signal V_{OUT} takes the low logic value (V_{OUT}=GND=0V) for a longer time when electrodes EL1 are in air.

It can be observed, in fact, that in Fig. 3a duration t₁ of the low logic value and duration t₂ of the high logic value are shorter than when the electrodes are in air (Fig. 3b).

In Figs. 3a-3d it has been assumed that the liquid in which electrodes EL1 and EL2 are immersed from time to time is always the same; hence durations t₁ and t₂ of the respective low and high logic values will be the same when the electrodes are immersed in the liquid.

Different liquids having different electric conductivity cause different durations of the logic values of the output signal. However, in order to determine whether an electrode pair is immersed in the liquid or not it will suffice to verify if the duration of the corresponding logic level is shorter than a preset value corresponding to the duration that would be obtained in the condition of electrodes in air.

### EXAMPLE 3

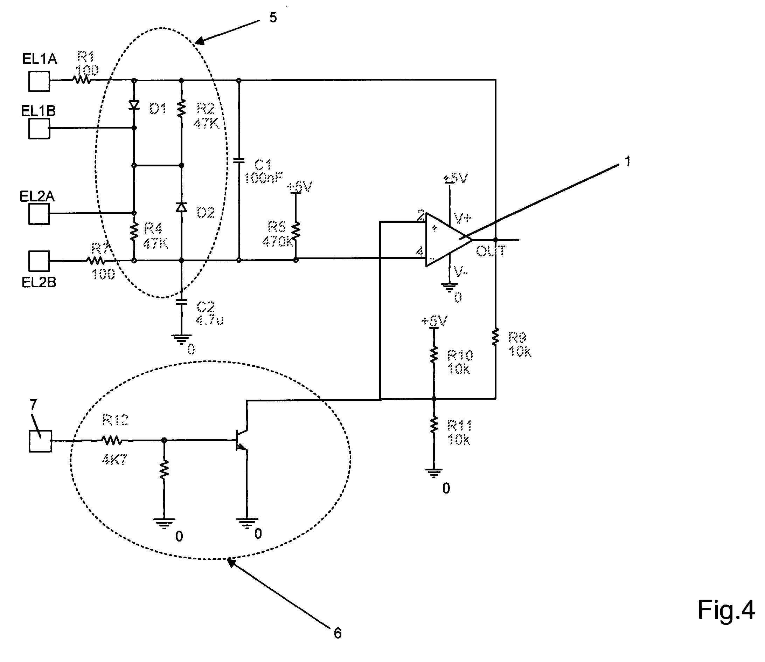

In the example of Fig. 4, the sensor is equipped with a circuit 6 for turning off the sensor itself.

Circuit 6 essentially consists of a BJT transistor Q2 set up as a common emitter, whose collector is connected to non-reversing input 2 of the operational amplifier. The pilot signal is received at the base of Q2 through resistors R12 and R13 (both of which are 4.7kΩ resistors).

The sensor is turned off by maintaining a high pilot signal at pilot input 7, and consequently at the base of transistor Q2.

Through the effect of this pilot signal, input 2 of operational amplifier 1 is forced to ground; as a consequence, the amplifier output voltage will drop to ground potential (0V) as well. Since Vout=0V, there will no longer be any potential difference between the electrodes (because they are located between Vout of the amplifier and the positive terminal of capacitor C2, which de facto remains discharged); hence no current will flow between the terminals anymore.

The sensor will thus be turned off, i.e. it will no longer oscillate; therefore, it will no longer detect any data through the electrodes.

This function allows to avoid that long periods (even years) of activation of the electrodes may give rise to electrolytic phenomena which in the long run may cause deterioration of the liquid (e.g. detergent or softener) and of the electrodes themselves. Also, this function appreciably reduces the current draw from the power supply. It follows that this function allows to keep the electrodes active only for the time strictly necessary for detecting the presence of liquid.

In order to ensure that the sensor stays off, in the example of Fig. 4 a 470kΩ resistor R5 is connected between the power supply (5V) and reversing input 4 of operational amplifier 1. This resistor causes input 4 to remain at a very low potential, e.g. 200mV, which is however higher than that of non-reversing input 2, thus ensuring that output OUT stays low and no current flows through the electrodes.

### EXAMPLE 4

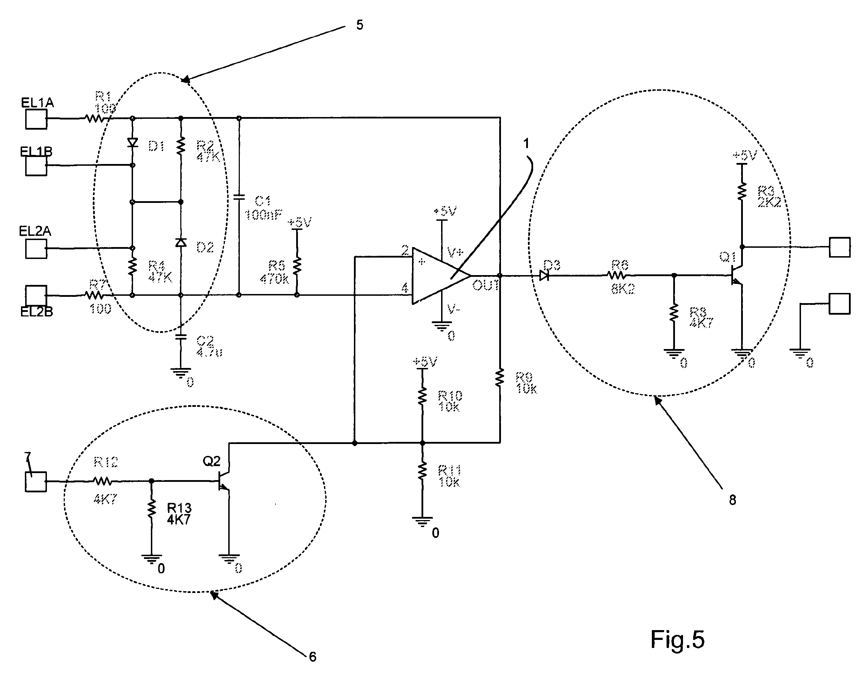

In the example of Fig. 5, the sensor of Fig. 4 is also fitted with an output circuit 8 whose purpose is to "square" the output signal of operational amplifier 1, which may be partially distorted especially when the presence of washing agents such as detergents or softeners is to be detected. As a matter of fact, these agents feature high conductivity and currents may flow which may saturate the amplifier.

In the example of Fig. 5, output circuit 8 essentially consists of a BJT transistor (Q1) set up as a common emitter, whose base is connected to output OUT of operational amplifier 1 through a pair of resistors R6 (8.2kΩ) and R8 (4.7kΩ) and a diode D3 (which is nevertheless optional in the embodiment shown in Fig. 5) for preventing any currents drawn from the output circuit from altering the operation of the oscillator.

Although in the example of Fig. 5 the output circuit has been added to a sensor like the one shown in Fig. 4, the very same output circuit may also be used in any other sensor according to the present invention.

### EXAMPLE 5

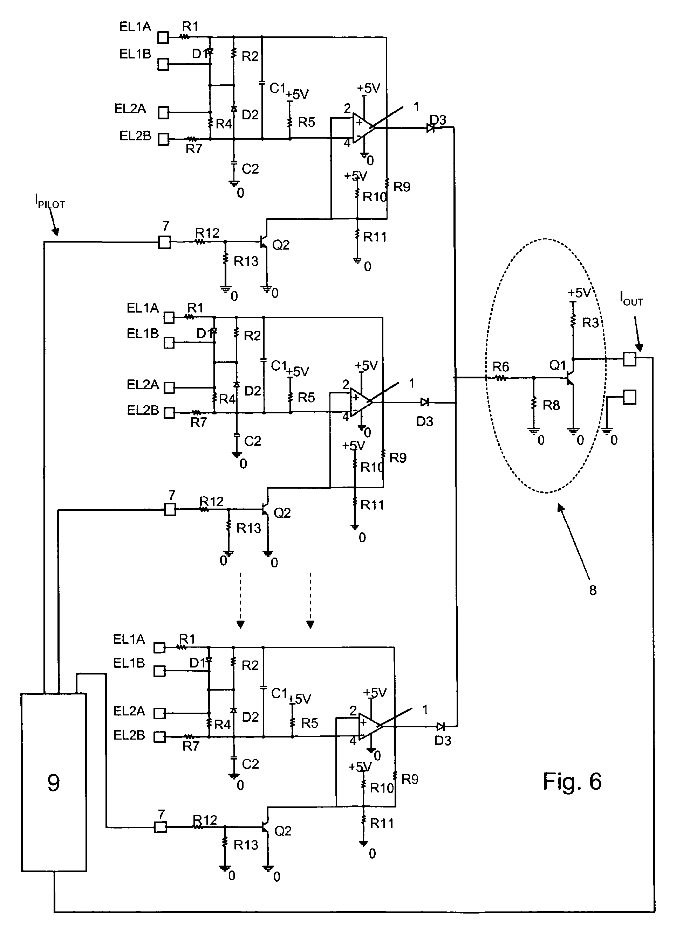

In the example of Fig. 6, the turn-off function is exploited in order to obtain a modular liquid detection system.

For example, let us assume that it is necessary to detect the presence of 2N liquids or 2N levels in a tank.

Instead of using N sensors with N outputs, the sensors are connected in a modular manner, with the outputs of the respective oscillators connected to one node.

In the example of Fig. 6, the sensors are of the type described above with reference to Fig. 5, but any other type of sensor according to the present invention may be used as well.

The system comprises a single output stage 8 connected between the output node that receives the oscillator outputs and an output line I_{OUT}.

In this case, the presence of diode D3 in output stage 8 is necessary in order to avoid any interference among the various sensors connected in a modular way. A control unit 9 (e.g. a microcontroller of a household appliance), which is to receive information from the 2N electrode pairs, is connected to output line I_{OUT} of the system and selectively activates one of the N sensors in order to read the output signal of the activated sensor on the output line.

In other words, the control unit advantageously turns off N-1 sensors by sending thereto a high pilot signal on respective pilot lines I_{PILOT}, thus leaving only the desired sensor turned on.

Advantageously, this solution allows to reduce the number of components as well as to reduce the number of input pins of control unit 9, which must receive information from the 2N electrode pairs.

### EXAMPLE 6

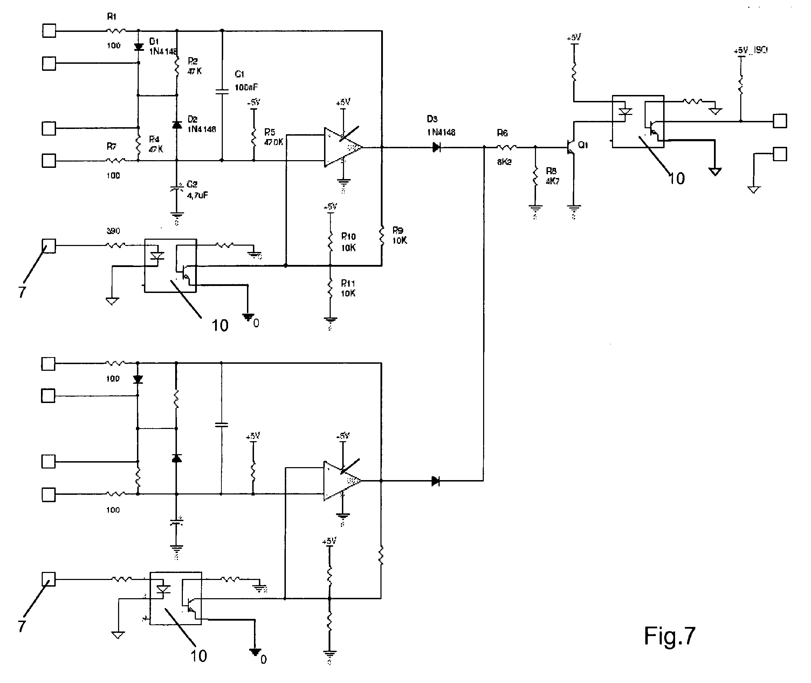

The example of Fig. 7 shows a further variant of the present invention.

Fig. 7 illustrates a detection system consisting of a pair of sensors connected to the same output through a single output circuit.

The pilot inputs and the output are isolated by means of an optoisolator 10.

In the example of Fig. 7, the optoisolator, e.g. 4N35 type, also performs the pilot circuit function in addition to the isolation function; therefore, the additional stage with transistor Q2 and resistors R12 and R13, like the one shown in Fig. 4, may be omitted.

Irrespective of what is shown in Fig. 7, it is apparent that the optoisolator may also be used with the sensors described in the preceding examples with reference to Figs. 1-6.

In general, it is therefore advantageous that the sensor includes at least one optoisolator adapted to separate it galvanically from at least one line, e.g. a sensor pilot line or a line for transmitting the sensor output signal (this measure, which is related to the electric safety of the household appliance, should be adopted especially when said pilot line or said transmission line are connected to the high-voltage power line).

In the example of Fig. 7, optoisolators 10 are of the 4N35 type and comprise internally a photodiode coupled to a photoreceiver consisting of a BJT transistor.

In pilot circuits, the BJT's base-to-emitter junction is used as a receiver; it follows that the base of the receiver BJT is connected to ground through a 100 kΩ resistor R15, the emitter is connected to ground, and the collector is connected to the non-reversing input of operational amplifier 1.

In optoisolators 10 connected to the pilot line, the photodiode anode is connected to the pilot line through a 390Ω resistor R14, so as to transmit the pilot signal, if present, to the oscillator.

In the output circuit, the BJT's base-to-emitter junction is used as a receiver; it follows that the base of receiver BJT is connected to ground through a 100 kΩ resistor R18, the emitter is connected to ground, and the collector, coupled to a 2,200Ω resistor R16, is the sensor output.

In the optoisolator connected to the output line, the photodiode anode is connected to the power supply through a 390Ω resistor R17, so as to ensure connection continuity between transistor Q1 and the output line.

### APPLICATIONS

A preferred application of the sensor according to the present invention is as a level sensor, e.g. for detecting when a liquid reaches a certain level in a tank.

To this end, at least one electrode pair of the sensor must be arranged inside the tank at the level to be detected. The output signal is then read, and the duration of the logic value of the output signal associated with the electrode pair is compared with a reference value (as explained with reference to Fig. 3).

This comparison allows to determine whether the electrode pair is immersed in a liquid or in air, so that it is determined whether there is liquid in the tank up to the level of the electrode pair.

For this and other applications, it is particularly advantageous to place the electrodes into the sensor within a bell, with only a short portion thereof protruding from the bell base.

When the electrodes are inserted vertically into the tank, the bell remains full of air, thereby preventing any liquid to enter; the electrode portions inside the bell body are thus kept dry.

Advantageously, at least a portion of the electrodes that stays inside the bell is coated with an insulating material, in particular plastic. In this manner, should any liquid ever get into the bell, for the electrodes to be short-circuited by the liquid it will be necessary that a continuous liquid film adheres to both the plastic part and the metallic part.

For a short circuit to take place, such a film will therefore need to be longer than in the case wherein the electrodes are not partially coated with insulating material (in this latter case, in fact, the film would only need to be as short as the gap between the electrodes).

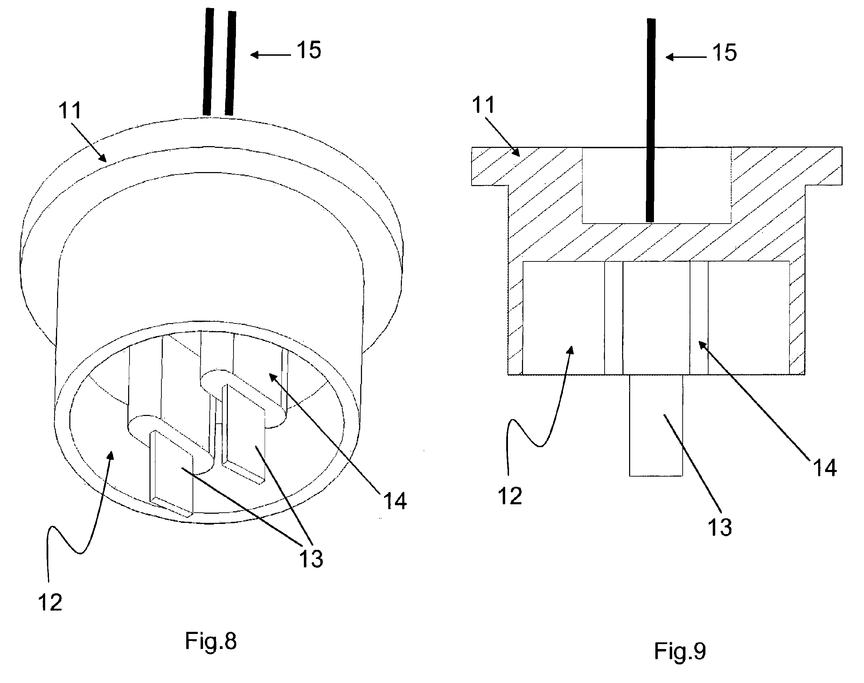

This increases the reliability of the sensor, because the longer the film needs to be, the less likely it will be that a continuous liquid film will deposit and the smaller the reliability loss, since the resistance between the electrodes is greater. Furthermore, the bell may advantageously be integrated into a cap 11 of the tank, as shown in Figs. 8 and 9.

Cap 11 comprises a bell-shaped body 12 crossed longitudinally by an electrode pair 13 (e.g. electrodes EL1); the latter consist of two small steel bars which run through two plastic jackets 14 coating the electrodes inside the bell.

Outside the bell, the electrodes are bare.

Electrodes 13 are connected through wires 15 to a board (not shown in the drawing) that houses the remaining part of the sensor.

Since each sensor according to the invention can handle two electrode pairs, each sensor may be associated with a pair of caps, so that two levels in one tank or in different tanks can be detected.

As an alternative, two or more electrode pairs may be inserted into one cap, so that a single cap can be used for measuring two levels in one tank. To this end, the electrodes must protrude from the bell base by a different length, so as to operate at different depths and detect the presence of liquid at two different levels.

The present invention is applicable to advantage to a "long-fill" washing machine equipped with a sensor in accordance therewith.

A long-fill washing machine has two tanks, one for detergent and one for softener, in which the respective washing agents are stored to be then dispensed in the course of different wash cycles.

Preferably, both tanks feature a dual level detection:
- maximum level, at which the control unit informs the user that the machine is ready to carry out a predetermined number of wash cycles without needing any refilling, and
- minimum level, at which the control unit warns the user that the tank should be refilled, said minimum level preferably corresponding to a spare quantity of liquid in the tank (i.e. a quantity that still allows a limited number of wash cycles to be carried out).

In order to detect the minimum and maximum levels in both tanks, the washing machine is equipped with a liquid detection system like the one shown in Fig. 7. Each tank may have two caps 11 of the type described above with reference to Figs. 8 and 9, wherein each cap comprises an electrode pair of a sensor connected to the control unit of the household appliance.

It is apparent that the above embodiment examples have been provided herein by way of non-limiting example, and that many changes may be made thereto by those skilled in the art.

For example, the electronic circuits may be provided on a single board or on more interconnected boards, and be obtained by using equivalent components and means; for example, although the above embodiment examples utilize BJT transistors, it is clear that field-effect transistors may be used as well.

It is also apparent that the present invention is preferably and advantageously applicable within the field of household appliances, e.g. to "long-fill" washing machines (having at least one tank for storing washing agents), but the sensor according to the present invention may also be employed in other technical fields. Finally, the sensor according to the present invention may be used not only for detecting the presence of a liquid, but also for determining the liquid type.

As aforementioned, since the duration of a logic level of the output signal depends upon the electric conductivity characteristics of the liquid, by detecting the duration of the logic level it is theoretically possible to identify the liquid in which the electrodes are immersed, or at least to discern among different classes of liquids or products.

For example, tests carried out have shown that the conductivity of detergents and softeners differs by one order of magnitude; it follows that the duration of the output logic signal will be different depending on whether a detergent or a softener is being detected. In this case, the user can be warned by the machine, through the latter's interface means, in the event that the wrong washing agent has been poured into either tank.

By appropriately sizing the oscillator and the control unit that receives the sensor output signal, the control unit may be made capable of discerning whether the liquid in which the electrodes are immersed is a detergent or a softener.

For this purpose, the control unit comprises a memory area with a look-up table wherein different liquid categories are associated w.ith different durations or duration intervals of the output logic value.

The control unit then compares the duration of a logic level of the output signal with a plurality of reference values (e.g. stored in the look-up table) so as to determine the type of the detected liquid as a function of the measured duration of the logic level.

## Claims

1. Sensor for detecting the presence of liquids, comprising:
an oscillator circuit whose output alternately has a low logic value and a high logic value, and
two electrode pairs (EL1, EL2) adapted to be immersed into liquids,
**characterized in that** said electrode pairs are connected to said oscillator through a circuit comprising at least one capacitor (C2), wherein the duration of charge phase of said capacitor (C2) depends upon the impedance across a first of said electrode pairs (EL2) corresponding to said high logic value and wherein the duration of discharge phase of said capacitor (C2) depends upon the impedance across a second of said electrode pairs (EL1) corresponding to said low logic value.

2. Sensor according to claim 1, wherein said oscillator comprises an operational amplifier (1), wherein said two electrode pairs (EL1, EL2) are connected between the output (OUT) and a first input (4) of said operational amplifier (1) through a depolarization circuit (5), wherein for a given logic value outputted by the operational amplifier (1) said depolarization circuit (3) is adapted to reverse, with respect to the case in which the other logic value is outputted, the polarity of that electrode pair which does not contribute to determining the duration of said output logic value.

3. Sensor according to claim 2, wherein said depolarization circuit (5) comprises two subcircuits, each comprising a resistor (R2,R4) and a diode (D1,D2) arranged in parallel, and wherein said subcircuits are connected in series with the diodes (D1,D2), which are connected in a manner such that each is conductive at a different logic level.

4. Sensor according to claim 3, wherein each electrode pair (EL1, EL2) is connected to a respective subcircuit of said two subcircuits, and wherein the diodes (D1,D2) of said subcircuits are so positioned as to be non-conductive when the respective electrode pair (EL1, EL2) is determining the duration of the output logic value.

5. Sensor according to any of the preceding claims, further comprising a pilot circuit (6) adapted to turn off the oscillator by setting the output thereof (OUT) to the low logic value.

6. Sensor according to any of the preceding claims, further comprising an output stage (8) adapted to square the output signal of said sensor.

7. Sensor according to any of the preceding claims, further comprising at least one optoisolator adapted to separate said sensor galvanically from at least one line, in particular a sensor pilot line or a line for transmitting the sensor output signal.

8. Sensor according to any of the preceding claims, wherein at least one of said electrode pairs is inserted into a bell and protrudes from the base of said bell, at least a portion of the electrodes that stays inside the bell being preferably coated with an insulating material, in particular plastic, said bell being preferably built into a cap.

9. Liquid detection system **characterized by** comprising at least one sensor according to any of claims 1 to 8 and a control unit (9) adapted to receive an output signal of said sensor and to compare the duration of a logic level of said output signal with at least one reference value.

10. System according to claim 9, wherein said control unit is adapted to compare said duration of a logic level of the output signal with a plurality of reference values, so as to determine the type of liquid detected as a function of said duration of a logic level of the output signal.

11. System according to claim 9 or 10, wherein said system comprises a plurality of sensors according to any of claims 1 to 8, and wherein the outputs of the oscillators of said plurality of sensors are connected to one output node.

12. Liquid detection system according to claim 11, wherein said control unit (9) is operationally connected to said output node and is adapted to selectively activate one sensor of said plurality in order to read the output signal of the activated sensor.

13. Detection system according to claim 11 or 12, further comprising an output stage connected between said output node and an output line.

14. Household appliance, in particular a laundry washing or washing/drying machine or a dishwasher, **characterized by** comprising a sensor according to any of claims 1 to 8 or a liquid detection system according to any of claims 9 to 13.

## Patentansprüche

1. Sensor zum Detektieren des Vorhandenseins von Flüssigkeiten, umfassend:
eine Oszillatorschaltung, deren Ausgabe abwechselnd einen niedrigen logischen Wert und einen hohen logischen Wert aufweist, und
zwei Elektrodenpaare (EL1, EL2), die angepasst sind, in Flüssigkeiten eingetaucht zu werden,
**dadurch gekennzeichnet, dass** die Elektrodenpaare mit dem Oszillator durch eine Schaltung verbunden sind, die zumindest eine Kapazität (C2) umfasst,
wobei die Dauer der Ladephase der Kapazität (C2) von der Impedanz über ein erstes Paar der Elektrodenpaare (EL2) abhängt, das mit dem hohen logischen Wert korrespondiert, und
wobei die Dauer der Entladephase der Kapazität (C2) von der Impedanz über ein zweites Paar des Elektrodenpaares (EL1) abhängt, das mit dem niedrigen logischen Wert korrespondiert.

2. Sensor nach Anspruch 1,
wobei der Oszillator einen Operationsverstärker (1) umfasst,
wobei die zwei Elektrodenpaare (EL1, EL2) zwischen dem Ausgang (OUT) und einem ersten Eingang (4) des Operationsverstärkers (1) durch eine Depolarisationsschaltung (5) verbunden sind,
wobei für einen gegebenen logischen Wert, der durch den Operationsverstärker (1) ausgegeben wird, die Depolarisationsschaltung (3) angepasst ist, die Polarität desjenigen Elektrodenpaares, das nicht zum Bestimmen der Dauer des logischen Ausgabewertes beiträgt, in Bezug auf den Fall, in dem der andere logische Wert ausgegeben wird, umzukehren.

3. Sensor nach Anspruch 2,
wobei die Depolarisationsschaltung (5) zwei Teilschaltungen umfasst, von denen jede einen Widerstand (R2, R4) und eine Diode (D1, D2), die jeweils parallel angeordnet sind, umfasst, und
wobei die Teilschaltungen in Reihe mit den Dioden (D1, D2) verbunden sind, die in einer solchen Art und Weise verbunden sind, dass jede von ihnen bei einem anderen logischen Niveau leitend ist.

4. Sensor nach Anspruch 3,
wobei jedes Elektrodenpaar (EL1, EL2) mit einer entsprechenden Teilschaltung der zwei Teilschaltungen verbunden ist, und
wobei die Dioden (D1, D2) der Teilschaltungen so angeordnet sind, dass sie nicht-leitend sind, wenn das entsprechende Elektrodenpaar (EL1, EL2) die Dauer des logischen Ausgabewertes bestimmt.

5. Sensor nach einem der vorangegangenen Ansprüche,
des Weiteren umfassend eine Pilotschaltung (6), die angepasst ist, den Oszillator durch Setzen des Ausgangs (OUT) des Oszillators auf den niedrigen logischen Wert auszuschalten.

6. Sensor nach einem der vorangegangen Ansprüche,
des Weiteren umfassend eine Ausgangsstufe (8), die angepasst ist, das Ausgabesignal des Sensors zu quadrieren.

7. Sensor nach einem der vorangegangenen Ansprüche,
des Weiteren umfassend zumindest einen Opto-Isolator, der angepasst ist, den Sensor galvanisch von zumindest einer Leitung zu trennen, insbesondere von einer Sensor-Pilot-Leitung oder einer Leitung zum Übertragen des Sensorausgabesignals.

8. Sensor nach einem der vorangegangen Ansprüche,
wobei zumindest eines der Elektrodenpaare in einen Trichter eingebracht ist und aus der Grundfläche des Trichters herausragt,
wobei zumindest ein Abschnitt der Elektroden, der im Innern des Trichters verbleibt, bevorzugt mit einem isolierenden Material, insbesondere mit Plastik, beschichtet ist,
wobei der Trichter bevorzugt in eine Kappe eingebaut ist.

9. Flüssigkeitsdetektionssystem,
**dadurch gekennzeichnet, dass** das System zumindest einen Sensor nach einem der Ansprüche 1 bis 8 und eine Steuereinheit (9) umfasst, die angepasst ist, ein Ausgabesignal des Sensors zu empfangen und die Dauer eines logischen Niveaus des Ausgabesignals mit zumindest einem Referenzwert zu vergleichen.

10. System nach Anspruch 9,
wobei die Steuereinheit angepasst ist, die Dauer eines logischen Niveaus des Ausgabesignals mit einer Mehrzahl von Referenzwerten zu vergleichen, um so den Typ der Flüssigkeit zu bestimmen, der als eine Funktion der Dauer eines logischen Niveaus des Ausgabesignals detektiert wird.

11. System nach Anspruch 9 oder 10,
wobei das System eine Mehrzahl von Sensoren nach einem der Ansprüche 1 bis 8 umfasst, und
wobei die Ausgänge der Oszillatoren der Mehrzahl von Sensoren mit einem Ausgangsknoten verbunden sind.

12. Flüssigkeitsdetektionssystem nach Anspruch 11,
wobei die Steuereinheit (9) operativ mit dem Ausgangsknoten verbunden ist und angepasst ist, selektiv einen Sensor der Mehrzahl von Sensoren zu aktivieren, um das Ausgabesignal des aktivierten Sensors zu lesen.

13. Detektionssystem nach Anspruch 11 oder 12,
des Weiteren umfassend eine Ausgangsstufe, die zwischen dem Ausgangsknoten und einer Ausgangsleitung verbunden ist.

14. Haushaltsgerät, insbesondere eine Wäschewaschmaschine oder eine Wasch-/Trocknungsmaschine oder ein Geschirrspüler,
**dadurch gekennzeichnet, dass** das Gerät einen Sensor nach einem der Ansprüche 1 bis 8 oder ein Flüssigkeitsdetektionssystem nach einem der Ansprüche 9 bis 13 umfasst.

## Revendications

1. Capteur permettant de détecter la présence de liquides comprenant :
un circuit oscillateur dont la sortie présente, alternativement, une valeur logique de niveau bas et une valeur logique de niveau haut, et
deux paires d'électrodes (EL1, EL2) adaptées pour être immergées dans des liquides,
**caractérisé en ce que**
lesdites paires d'électrodes sont connectées au dit oscillateur par l'intermédiaire d'un circuit comprenant au moins un condensateur (C2), dans lequel la durée de la phase de charge dudit condensateur (C2) dépend de l'impédance à travers une première paire desdites paires d'électrodes (EL2) correspondant à ladite valeur logique de niveau haut et dans lequel la durée de la phase de décharge dudit condensateur (C2) dépend de l'impédance à travers une seconde paire desdites paires d'électrodes (EL1) correspondant à ladite valeur logique de niveau bas.

2. Capteur selon la revendication 1, dans lequel ledit oscillateur comprend un amplificateur opérationnel (1), dans lequel lesdites deux paires d'électrodes (EL1, EL2) sont connectées entre la sortie (OUT) et une première entrée (4) dudit amplificateur opérationnel (1) par l'intermédiaire d'un circuit de dépolarisation (5), dans lequel pour une valeur logique donnée délivrée par l'amplificateur opérationnel (1) ledit circuit de dépolarisation (3) est adapté pour inverser, par rapport au cas dans lequel l'autre valeur logique est délivrée, la polarité de cette paire d'électrodes qui ne contribue pas à déterminer la durée de ladite valeur logique de sortie.

3. Capteur selon la revendication 2, dans lequel ledit circuit de dépolarisation (5) comporte deux sous-circuits, comprenant chacun une résistance (R2, R4) et une diode (D1, D2) disposées en parallèle, et dans lequel lesdits sous-circuits sont connectés en série avec les diodes (D1, D2), lesquelles sont connectées d'une manière telle que chacune soit conductrice en présence d'un niveau logique différent.

4. Capteur selon la revendication 3, dans lequel chaque paire d'électrodes (EL1, EL2) est connectée à un sous-circuit respectif desdits deux sous-circuits, et dans lequel les diodes (D1, D2) desdits sous-circuits sont positionnées de façon telle qu'elles ne soient pas conductrices lorsque la paire respective d'électrodes (EL1, EL2) est en cours de détermination de durée de la valeur logique de sortie.

5. Capteur selon l'une quelconque des revendications précédentes, comprenant, de plus, un circuit pilote (6) adapté pour mettre hors tension l'oscillateur en établissant sa sortie (OUT) à la valeur logique de niveau bas.

6. Capteur selon l'une quelconque des revendications précédentes, comprenant, de plus, un étage de sortie (8) adapté pour rendre carré le signal de sortie dudit capteur.

7. Capteur selon l'une quelconque des revendications précédentes, comprenant, de plus, au moins un isolateur optoélectronique adapté pour séparer ledit capteur par isolement galvanique d'au moins une ligne, en particulier d'une ligne de pilotage de capteur ou d'une ligne permettant de transmettre le signal de sortie du capteur.

8. Capteur selon l'une quelconque des revendications précédentes, dans lequel au moins l'une desdites paires d'électrodes est insérée dans une cloche et fait saillie à partir de la base de ladite cloche, une partie au moins des électrodes qui demeure à l'intérieur de la cloche étant, de préférence, recouverte d'un matériau isolant, en particulier de matière plastique, ladite cloche étant, de préférence, intégrée dans un couvercle.

9. Système de détection de liquides **caractérisé par** le fait de comporter au moins un capteur selon l'une quelconque des revendications 1 à 8 et une unité de commande (9) adaptée pour recevoir un signal de sortie dudit capteur et pour comparer la durée d'un niveau logique dudit signal de sortie avec au moins une valeur de référence.

10. Système selon la revendication 9, dans lequel ladite unité de commande est adaptée pour comparer ladite durée d'un niveau logique du signal de sortie avec une pluralité de valeurs de référence, de façon à déterminer le type de liquide détecté en fonction de ladite durée d'un niveau logique du signal de sortie.

11. Système selon la revendication 9 ou 10, dans lequel ledit système comporte une pluralité de capteurs selon l'une quelconque des revendications 1 à 8, dans lequel les sorties des oscillateurs de ladite pluralité de capteurs sont connectées à un noeud de sortie.

12. Système de détection de liquides selon la revendication 11, dans lequel ladite unité de commande (9) est connectée fonctionnellement au dit noeud de sortie et est adaptée pour activer sélectivement l'un des capteurs de ladite pluralité afin de lire le signal de sortie du capteur activé.

13. Système de détection de liquides selon la revendication 11 ou 12, comportant, de plus, un étage de sortie connecté entre ledit noeud de sortie et une ligne de sortie.

14. Appareil domestique, en particulier machine à laver le linge ou à laver/sécher le linge, ou lave-vaisselle, **caractérisée par** le fait de comporter un capteur selon l'une quelconque des revendications 1 à 8 ou un système de détection de liquides selon l'une quelconque des revendications 9 à 13.
